# EUROPEAN PATENT APPLICATION

(11) **EP 1 090 678 A1**
(43) Date of publication of application: **11.04.2001**
(21) Application number: 00830607.8
(22) Date of filing: 07.09.2000
(51) Int. Cl.: B01F 13/10, B65G 47/19, B65G 63/04

(54) **A batching plant for powder or granule components**

(30) Priority: 30.09.1999 IT MO990208
(71) Applicant: S.A.R.A. Elettrica S.n.c. di Lasagni e C., 42048 Rubiera - Reggio Emilia (IT)
(72) Inventor: Lasagni, Loriano, 42048 Rubiera-Reggio Emilia (IT)
(74) Representative: Gotra, Stefano

(57) **Abstract**

The batching plant for powder or granule components comprises a mobile skip (2) bearing a recipient (3) provided with means for weighing; a plurality of hoppers (7) for the powder components of a mixture to be made up; for each hopper, a screw-type batcher (8) for transferring batched quantities of powder material from the hopper (7) to the recipient (3); an unloading station (9) for emptying the recipient (3); a mixer (10) for powder material which is distant from the unloading station (9); a pneumatic powder transfer device (11, 12, 13, 14) for mixing the material unloaded from the recipient (3). The plant is particularly useful in making up animal feed products constituted by mixtures of various substances in the loose solid state, according to predetermined batches. The batching is extremely precise and can be carried out at relatively high operating speeds.

## Description

Specifically, though not exclusively, the invention can be used for making up animal feeds constituted by mixtures of various substances (vitamins, micronutrients, additives and so on) in solid loose state and batched according to predetermined quantities.

The main aim of the present invention is to realise a plant for batching powder-or granule-form components with which extremely precise batches can be made up in relatively swift operating times.

An advantage of the invention is that it enables considerable simplification of the plant thanks to the fact that it eliminates all displacements of the hoppers containing the single components to be batched.

A further advantage of the invention is that it provides a batching plant which eliminates risk of contact of the powders with the personnel staffing the plant.

A still further advantage of the present invention is that it provides a plant which guarantees that the material subject to batching is neither altered nor contaminated.

A further advantage of the invention is that it reduces residues and waste to a minimum.

A still further advantage is that it provides a plant having relatively low manufacturing, operation and maintenance costs.

These aims and advantages and more besides are all attained by the present invention, as it is characterised in the appended claims.

Further characteristics and advantages of the present invention will better emerge from the detailed description that follows of a preferred but non-exclusive embodiment of the invention, illustrated purely by way of a non-limiting example in the accompanying figure, in which:

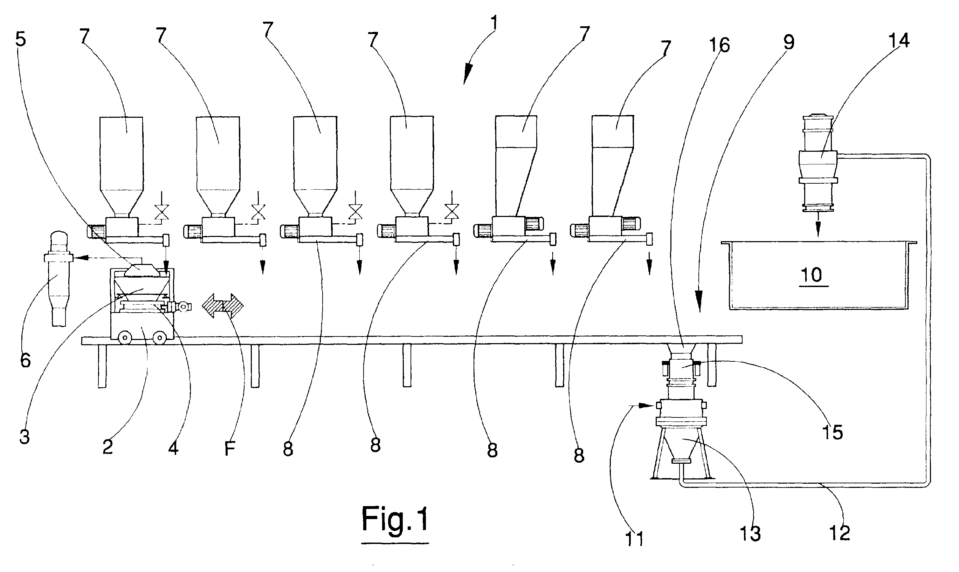

figure 1 is a schematic vertical elevation of the plant made according to the invention.

With reference to the above-mentioned figure, 1 denotes in its entirety a batching plant for loose powder or granule components, comprising at least one skip 2, mobile horizontally along a predetermined path. In the illustrated example the path is straight in direction F and the skip 2 can move in both directions along fixed guides.

The skip 2 superiorly bears a recipient 3 having an open top for receiving the components in powder or granule form, and a lower outlet opening having means for closing 4 which can be opened on command. In the illustrated embodiment the means for closing 4 comprise a rotatable butterfly valve which is activated by a motor solidly constrained to the skip 2, though other types of shutter valve might be used, for example a gate valve. The recipient 3 is provided with means for weighing of known type, which weigh the contents of the recipient. An aspiration hood 5, applied on the recipient 3, operates in correspondence with the upper inlet of the recipient 3. 6 denotes means for aspiration which are external of the skip 2 and connected to the hood 5.

A plurality of hoppers 7 is arranged along the path of the skip 2, above the top of the skip 2. In the illustrated embodiment, the hoppers 7 are arranged in two parallel lines situated on opposite sides of the path of the skip 2 (in figure 1 only one line of hoppers 7 is visible). Each hopper 7 contains a powder component of a mixture to be made up and is provided with batchers 8 for transferring, on command, batched quantities of materials from the hopper 7 to the recipient positioned beneath the hopper 7. The batchers 8 comprise, in the illustrated embodiment, a horizontal-axis screw-type batcher. The batched quantities can be relatively small, for example a few grams. The batchers 8 are commanded by a signal provided by the means for weighing associated to the skip 2, so as to enable transfer of a predetermined quantity of each component to the recipient 3.

The plant 1 comprises an unloading station 9 for the powder material contained in the recipient 3, predisposed at an end of the path of the skip 2, at which station the recipient 3 can be emptied of its contents through the bottom opening.

The plant 1 also comprises means for transferring the powder material which exits from the recipient 3 in the unloading station 9 and a mixer 10 for the powder materials which is located at a certain distance from the unloading station 9 itself. The mixer can be, for example, a screw-type mixer. The means for transferring comprise a pneumatic transport device. 11 denotes the compressed air supply for the transport device; 12 denotes a pipe for pneumatically conveying the powder material from an air propeller 13 arranged below the unloading station 9 to a self-cleaning filter 14 arranged above the mixer 10, of known type.

A vertical-axis conduit 15 is located in the unloading station 9, which conduit 15 is telescopically extensible on command and can assume an upper extended position for containing and guiding the powder material exiting inferiorly from the recipient 3 and transferring the material to the means for transferring, and a lower position in which it is relatively distant from the lower opening of the recipient 3. In the upper position the conduit 15 is coupled and coaxial to a fixed conduit 16, forming in effect a single powder material discharge conduit.

When the recipient 3 is located at the unloading station 9, the conduit 16 is situated below the recipient 3.

During operation, the skip 2 is positioned so that the recipient 3 is beneath a hopper 7 of a predetermined component, alter which the batchers 8 send a predetermined quantity of the component down into the recipient 3, under the control of the means for weighing associated to the recipient 3. This operation is repeated for each hopper 7 containing a component of the mixture to be made up. Once all the pre-selected components have been batched into the recipient 3, the recipient 3 is moved to the unloading station 9, where the whole powder mixture contained in the recipient 3 is unloaded and, through the pneumatic transport device, is totally conveyed to the mixer 10, leaving no residues along the path. A new operative cycle can now begin, making up a new mixture batched according to preselected parameters.

The plant of the invention enables powders to be batched and transferred with no pollution of the workplace. Thanks to the invention the batching plant can be advantageously installed in zones which are quite remote from the mixer 10.

## Claims

1. A batching plant for powder or granule components, characterised in that it comprises:
at least one skip (2) horizontally mobile on command along a predetermined path;
a recipient (3) borne on the skip (2) and having an upper inlet and a lower outlet, at which lower outlet are located means for closing (4) which can be opened on command, the recipient (3) being provided with means for weighing which are predisposed for weighing material contained in the recipient (3);
a plurality of hoppers (7) predisposed along the path above the mobile skip (2), each of which hoppers (7) contains a powder component of a mixture to be made up and also exhibits batchers (8) for transferring, on command, quantities of material from any of the hoppers (7) into the recipient (3) positioned beneath; the hoppers (7) being commanded by a signal provided by the means for weighing so that a predetermined quantity of component is transferred into the recipient (3);
an unloading station (9) of powder material contained in the recipient (3), predisposed along the path, into which the recipient (3) can be emptied of its contents, which contents are released through the lower outlet;
a mixer (10) for powder material which is distant from the unloading station (9);
means for transferring the powder material exiting from the recipient (3) into the unloading station (9).

2. The plant of claim 1, characterised in that it comprises an aspiration hood (5) associated with the recipient (3) and operating at the upper inlet thereof.

3. The plant of claim 1 or 2, characterised in that it comprises two parallel lines of hoppers (7) situated on opposite sides of the path.

4. The plant of any one of the preceding claims, characterised in that the means for transferring the powder material from the unloading station (9) to the mixer (10) comprise a pneumatic transfer device (11, 12, 13, 14).

5. The plant of any one of the preceding claims, characterised in that the batchers (8) for transferring the powder component from the hoppers (7) to the recipient (3) comprise a horizontal-axis screw-type batching device.

6. The plant of any one of the preceding claims, characterised in that the means for closing (4) the lower outlet of the recipient (3) comprise a butterfly valve which is rotatable on command of a motor constrained to the skip (2).

7. The plant of any one of the preceding claims, characterised in that a conduit (15) is located at the unloading station (9), which conduit (15) is vertical-axis and telescopically extensible on command, and can assume an upper position in which it can contain and guide the powder material which exits from the lower outlet of the recipient (3) and is then conveyed towards the means for transferring, and a lower position in which the conduit (15) is distant from the lower outlet of the recipient (3).
